# EUROPEAN PATENT APPLICATION

(11) **EP 1 728 832 A1**
(43) Date of publication of application: **06.12.2006**
(21) Application number: 05721142.7
(22) Date of filing: 18.03.2005
(51) Int. Cl.: C08L 101/00, C08J 9/30, C08K 5/00, C08L 75/04

(54) **MOLDING OF RESIN FOR CUTTING OPERATION, MATERIAL FOR FORMATION THEREOF AND MODEL**

(30) Priority: 23.03.2004 JP 2004085344; 28.12.2004 JP 2004379403
(71) Applicant: Sanyo Chemical Industries, Ltd., Kyoto-shi, Kyoto 605-0995 (JP)
(72) Inventor: SASATANI, Yuichi c/o Sanyo Chem. Industries, Ltd., Kyoto-shi, Kyoto 605-0995 (JP); MIURA, Kimio c/o Sanyo Chem. Industries, Ltd., Kyoto-shi, Kyoto 605-0995 (JP); AWAHARA, Masaki c/o Sanyo Chem. Industries, Ltd., Kyoto-shi, Kyoto 605-0995 (JP)
(74) Representative: Vossius & Partner
(86) International application number: PCT/JP2005/004978
(87) International publication number: WO 2005/090479

(57) **Abstract**

A machinable resin molded product having a charge half-life of 1 to 60 seconds and a Water content of 0.05 to 1.0 wt%, a model obtained by cutting the resin molded product, and a machinable resin-forming material comprising a hard resin component (A) and a non-silicone surfactant (B) are provided, whereby a machinable resin-forming material such that powder or dust generated from the same in a cutting process does not adversely affect electronically controlled circuits of a processing machine, thereby not causing malfunctions, accidental stops, etc. of the processing machine, a machinable resin molded product made of the foregoing resin-forming material, and a model obtained by cutting the molded product are provided.

## Description

### Technical Field

The present invention relates to a machinable (cuttable) resin molded product, a material for forming the foregoing resin molded product, and a model obtained by cutting the foregoing resin molded product.

### Background Art

Conventionally used as materials for models have been natural lumber and machinable polyurethane resin molded products. The machinable polyurethane resin molded products, which are so-called synthetic wood, are, for example, foamed polyurethane molded products obtained by foaming with a mechanical froth method a mixture of an alkylene oxide adduct of bisphenol, an aliphatic polyol, aromatic polyisocyanate, and a dehydrating agent (see, for example, Patent document 1 shown below).
Patent document 1: JP 06-329747 A

### Summary of Invention

However, the conventional material has the following problem: powder or dust generated in a cutting process and static electricity accumulated in therein adversely affect electronically controlled circuits of a cutting machine, and malfunctions, accidental stopping, etc. of the cutting machine frequently occur.

It is an object of the present invention to solve the above-described problem and to provide: a machinable resin-forming material such that powder or dust generated from the same in a cutting process does not adversely affect the control of a processing machine; a machinable resin molded product made of the foregoing resin-forming material; and a model obtained by cutting the resin molded product.

In other words, the present inventions are:
a machinable resin molded product having charge half-life of 1 second to 60 seconds, and a water content of 0.05 percent by weight (hereinafter referred to as wt%) to 1 wt%;
a model obtained by cutting the foregoing resin molded product; and
a material for forming the machinable resin molded product, as a material for forming the above-described resin molded product, containing a hard resin component (A) and a non-silicone surfactant (B).

With use of the material of the present invention, malfunctions of a cutting machine caused by static electricity accumulated in powder or dust adhering to walls of the machine or settling on a surface plate or a floor are eliminated. Besides, since the powder or dust adhering thereto can be removed easily, the working environment is kept clean.

The machinable resin molded product obtained in the present invention has only small decreases in values of physical properties of the resin. Therefore, it is widely applicable for various purposes ranging from a material for a product requiring strength, such as a master model for casting or a checking fixture, to a material for a design model, having a low density and not requiring high strength.

### Detailed Description of the Invention

A molded product of the present invention is a machinable resin molded product having a charge half-life of 1 to 60 seconds and a water content of 0.05 to 1 wt%.

The charge half-life is a period of time (second) in which an amount of charges in a test specimen decreases to half immediately after a voltage of -5 kV was applied for three seconds under conditions of 23°C and 55 %RH to a test specimen obtained by cutting a resin molded product to a size of 40 mm (length) × 40 mm (width) × 3 mm (thickness). This charge half-life is a charge half-life measured according to JIS L 1094: 1997; 2. (1) the half-life measuring system.

The charge half-life (second) of the machinable resin molded product of the present invention is 1 to 60 seconds, and it preferably is 1 to 50 seconds, and more preferably 1 to 40 seconds, from the aspect of preventing machine malfunctions caused by electrification.

The water content is a value measured by cutting a molded product under conditions of 20°C and 30 %RH with a 20 mm-diameter four-blade flat end mill under conditions of 3000 revolutions per minute (rpm), a feed speed of 300 mm/min, and a cutting depth of 10 mm, collecting powder generated by cutting, sieving the powder with a 20-mesh sieve, and subjecting the particles having passed the sieve to measurement with a Karl Fischer moisture meter (JIS K2275: 1996).

The water content (wt%) of the machinable resin molded product of the present invention is approximately 0.05 to 1 wt%. From the aspect of improving the appearance of a cut surface, the prevention of density decrease owing to foaming, and texture improvement, the water content preferably is 0.1 to 0.9 wt%, more preferably 0.1 to 0.8 wt%, and particularly preferably 0.1 to 0.7 wt%. With the water content in this range, a molded product or a model having cut surfaces with fine texture and excellent appearance can be obtained.

The machinable resin molded product of the present invention refers to a resin molded product at a stage prior to the cutting process for producing a model. The shape of the machinable resin molded product is not limited particularly. The machinable resin molded product may have a size and a shape such that an intended model can be obtained therefrom by cutting, and be transformed into an appropriate shape according to a type of the intended model. The product accordingly is in an arbitrary shape such as a block-like shape (approximately cubic shape, indefinite shape), a bar-like shape (cylindrical shape, prism shape), or a sheet-like shape.

Examples of the hard resin component (A) of the present invention include polyurethane resin components (A1), polyurea resin components (A2), polyamide resin components (A3), epoxy resin components (A4), vinyl resin components (A5), unsaturated polyester resin components (A6), etc.

The polyurethane resin component (A1) is composed of a polyol component (A1-a) and an isocyanate component (A1-b).

As the polyol component (A1-a), those having been used for polyurethanes conventionally can be used. For example, polyether polyols (A1-a1), polyester polyols (A1-a2), polybutadiene polyols (A1-a3), polyacryl polyols (A1-a4), and polymer polyols (A1-a5) obtained by polymerizing a vinyl monomer such as styrene or acrylonitrile in a polyol can be used.

Preferred as the polyol component (A1-a) are the polyether polyols (A1-a1), and more preferred are propylene oxide (hereinafter abbreviated as PO) adducts, and co-adducts of ethylene oxide (hereinafter abbreviated as EO) and PO (hereinafter referred to as "EO-PO co-adducts") to low-molecular-weight polyols, polyhydric phenols, or amines.

Particularly preferable specific examples of the polyether polyols (A1-a1) include PO adducts of glycerol, trimethylol propane, pentaerythritol, sorbitol, sucrose, bisphenol A, or triethanolamine.

The polyol component (A1-a) preferably has a hydroxyl value of 200 to 1000, more preferably 250 to 600, and particularly preferably 300 to 500. In other words, the lower limit of the hydroxyl value of the polyol component (A1-a) preferably is 200, more preferably 250, and particularly preferably 300. Likewise, the upper limit of the same preferably is 1000, more preferably 600, and particularly preferably 500. With the hydroxyl value in the foregoing range, the thermal resistance and strength of a molded product is improved further, and the occurrence to scorch owing to heat generated during molding is further reduced.

As the isocyanate component (A1-b), those having been used for polyurethane conventionally can be used. For example, the following can be used: aromatic polyisocyanates (e.g. 1,3- and/or 1,4-phenylene diisocyanates, 2,4- and/or 2,6-tolylene diisocyanates (TDI), diphenylmethane-2,4'- and/or 4,4'-diisocyanates (MDI), polymethylene polyphenyl isocyanates (e.g. crude MDI), naphthylene-1,5-diisocyanate, triphenylmethane-4,4',4"-triisocyanate); aliphatic polyisocyanates (e.g. ethylene diisocyanate, tetramethylene diisocyanate, hexamethylene diisocyanate, lysine diisocyanate); alicyclic polyisocyanates (e.g. isophorone diisocyanate, dicyclohexylmethane diisocyanate [hydrogenated MDI]); araliphatic polyisocyanates (e.g. xylylene diisocyanate, diethylbenzene diisocyanate), and modified products of these polyisocyanates (e.g. carbodiimide-modified MDI, isocyanate group terminated prepolymers of polyhydric alcohols such as sucrose and TDI)

Among these, aromatic polyisocyanates are preferred, and crude MDI is particularly preferred.

The poly-urea resin component (A2) is composed of a polyamine component (A2-a) and an isocyanate component (A2-b). As the isocyanate component (A2-b), those used as the isocyanate components (A1-b) described above can be used.

As the polyamine component (A2-a), the following can be used: alkanolamines (e.g. diethanolamine, triethanolamine), alkylamines (having 1 to 20 carbon atoms in the alkyl group) (e.g. ethylamine), alkylenediamines (having 2 to 6 carbon atoms in the alkylene group) (e.g. ethylenediamine, hexamethylenediamine), polyalkylenepolyamines [aliphatic polyamines having 2 to 6 carbon atoms in the alkylene group (e.g. diethylenetriamine, triethylenetetramine, hexamethyleneheptamine), aromatic amines having 6 to 20 carbon atoms (e.g. toluenediamine, diphenylmethanediamine), alicyclic amines having 4 to 15 carbon atoms (e.g. isophoronediamine, cyclohexylenediamine), heterocyclic amines having 4 to 15 carbon atoms (e.g. aminoethylpiperazine)], etc.

As the polyamine component (A2-a), aliphatic amines are preferred. Further preferred are alkanolamines and alkylamines.

Examples of the polyamide resin component (A3) include ring-opening polymerization products of cyclic lactams, polycondensation products of aminocarboxylic acids, polycondensation products of dibasic acids and diamines, etc. More specifically, the following can be used: aliphatic polyamides such as nylon 6, nylon 46, nylon 66, nylon 610, nylon 612, nylon 11, and nylon 12; aliphatic-aromatic polyamides such as poly(methaxylene adipamide), poly(hexamethylene terephthalamide), poly(hexamethylene isophthalamide), poly(tetramethylene isophthalamide), and copolymers and mixtures of the same. Preferred as the polyamide resin component (A3) are nylon 6, nylon 66, and nylon 6/66.

The polymerization degree of the polyamide is not particularly limited, but preferably, the relative viscosity measured under the condition that the concentration of polyamide in 98 wt% concentrated sulfuric acid is 1 wt% and the condition of 25°C according to JIS-K6810 is not less than 1.7 from the aspect of polymerization stability and less than 6.0 from the aspect of processability.

The method for polymerization of polyamide used in the present invention is not particularly limited, and any one of melt polymerization, interfacial polymerization, solution polymerization, mass polymerization, solid phase polymerization, and combinations of these methods can be used.

The epoxy resin component (A4) is composed of a polyepoxide component (A4-a) having two or more epoxy groups in one molecule, and a polyamine-based curing agent (A4-b) or an acid-anhydride-based curing agent (A4-c).

As the polyepoxide component (A4-a), the following can be used: polyglycidyl ethers obtained by reacting an epihalohydrin (e.g. epichlorohydrin) or a dihalohydrin (e.g. glycerol dichlorohydrin) with a polyhydric (2 to 6 hydroxyl groups or more) phenols having 6 to 50 carbon atoms or more [e.g. bisphenol A, bisphenol F, 1,1-bis(4-hydroxyphenyl)ethane, resorcinol, hydroquinone, catechol, nuclear-substituted products thereof, halogen compounds thereof, etc.] or a polyhydric (2 to 6 hydroxyl groups or more) alcohols having 2 to 100 carbon atoms [e.g. alkane polyols (e.g. ethylene glycol, propylene glycol, 1,3-butanediol, 1,4-butanediol, trimethylolpropane, glycerol, pentaerythritol), polyalkylene glycols having a number-average molecular weight of not more than 3,000 (2 to 4 carbon atoms in the alkylene group) (e.g. diethylene glycol, triethylene glycol, tetraethylene glycol, polyethylene glycol), etc.]; or polyglycidyl esters obtained by reacting an epihalohydrin or a dihalohydrin with an aliphatic or aromatic polycarboxylic acid having 6 to 20 carbon atoms or more and having 2 to 6 carboxyl groups or more (e.g. oxalic acid, fumaric acid, maleic acid, succinic acid, glutaric acid, adipic acid, phthalic acid, isophthalic acid, terephthalic acid, tetrahydrophthalic acid, and halogen compounds thereof).

Among these, polyglycidyl ethers of polyhydric phenols are preferred, and glycidyl ethers of bisphenol A, bisphenol F, and 1,1-bis(4-hydroxyphenyl)ethane are more preferred. Furthermore, those having a viscosity at 25°C of not more than 15,000 mPa·s and an epoxy equivalent of 180 to 200 are preferred.

As the polyamine-based curing agent (A4-b), the following can be used: aliphatic polyamines having 2 to 18 carbon atoms; alicyclic polyamines having 4 to 15 carbon atoms; aromatic polyamines having 6 to 20 carbon atoms; heterocyclic polyamines having 4 to 15 carbon atoms; polyamideamine-based curing agents, etc.

As the aliphatic polyamines, the following can be used: alkylenediamines having 2 to 6 carbon atoms (e.g. ethylenediamine, propylenediamine, tetramethylenediamine); polyalkylene (dialkylene to hexaalkylene) polyamines having 2 to 6 carbon atoms in the alkylene group [e.g. diethylenetriamine, triethylenetetramine, tetraethylenepentamine, pentaethylenehexamine, iminobispropylamine, bis(hexamethylene)triamine]; substituted products thereof with an alkyl group (having 1 to 4 carbon atoms in the alkyl group) or substituted products thereof with a hydroxyalkyl group (having 2 to 4 carbon atoms in the hydroxyalkyl group) [e.g. dialkyl (having 1 to 4 carbon atoms in the alkyl group) aminopropylamine, diethylaminopropylamine, aminoethylethanolamine]; diethylene glycol bispropylenediamine; and aromatic ring-containing aliphatic polyamines having 8 to 15 carbon atoms (e.g. metaxylylenediamine).

As the alicyclic polyamines, for example, isophoronediamine, bis(4-amino-3-methylcyclohexyl)methane, etc. can be used.

As the aromatic polyamines, metaphenylenediamine, diaminodiphenylmethane, etc. can be used.

As the heterocyclic polyamines, for example, N-aminoethylpiperazine, etc. can be used.

Used as the polyamideamine-based curing agent are those obtained by reacting a dimer acid containing a polymerized aliphatic acid having 36 carbon atoms as a main component, with an excess (at least 2 moles per one mole of the acid) of a polyamine (e.g. the above-described alkylenediamines and polyalkylenepolyamines). The dimer acid is produced by heat polymerizing an unsaturated fatty acid containing linoleic acid or oleic acid as a main component in the presence of a catalyst.

As the acid anhydride-based curing agent (A4-c), the following can be used: aromatic acid anhydrides [e.g. phthalic anhydride, trimellitic anhydride, ethylene glycol bis(anhydrotrimellitate), glycerol tris(anhydrotrimellitate), pyromellitic anhydride, 3,3',4,4'-benzophenonetetracarboxylic acid anhydride]; and aliphatic acid anhydrides [e.g. maleic anhydride, succinic anhydride, tetrahydro phthalic anhydride, methyltetrahydro phthalic anhydride, "nadic methyl anhydride" (methyl-5-norbornene-2,3-dicarboxylic anhydride), alkenyl succinic anhydrides having 8 to 12 carbon atoms in the alkenyl group, hexahydro phthalic anhydride, methylhexahydro phthalic anhydride, methylcyclohexenetetracarboxylic acid anhydride, polyadipic acid anhydride (weight-average molecular weight: 750 to 850), polyazelaic acid anhydride (weight-average molecular weight: 1,200 to 1,300), and polysebacic acid anhydride (weight-average molecular weight: 1,600 to 1,700)].

Among these curing agents, polyamine-based curing agents are preferred, and aliphatic polyamines having 2 to 18 carbon atoms are more preferred. Furthermore, those having a viscosity at 25°C of not more than 15,000 mPa·s are preferred.

The ratio of these curing agents used is preferably between 0.25 and 2.0, more preferably between 0.5 and 1.75 equivalent of a curing agent with respect to epoxy equivalent.

As the vinyl resin component (A5), one selected from the following can be used alone, or a mixture of two or more of the same can be used: polyethylene, polypropylene, polybutadiene, poly(vinyl chloride), poly(vinylidene chloride), poly(vinyl acetate), polyvinyl alcohol, polystyrene, polyacrylate, polymethyl acrylate, polyacrylic acid, polymethacrylic acid, polyacrylamide, polymethacrylamide, polyacrylonitrile, polymethacrylonitrile, polytetrafluoroethylene, polychlorotrifluoroethylene, poly(vinylidene fluoride), styrene-acrylic acid copolymer, ethylene-acrylate copolymer, styrene-butadiene copolymer, acrylonitrile-butadiene copolymer, acrylonitrile-styrene copolymer, ethylene-vinyl acetate copolymer, ethylene-vinyl alcohol copolymer, propylene-ethylene copolymer, and acrylonitrile-butadiene-styrene copolymer.

Regarding the molecular weight of the resin herein used, the resin desirably has a weight-average molecular weight in the terms of polystyrene measured by GPC (gel permeation chromatography) of not less than 100,000, from the aspect of the strength of the same as a machinable resin.

The unsaturated polyester resin component (A6) is not particularly limited, but an unsaturated polyester obtained by reacting an acid component containing α,β-unsaturated polybasic acid with an alcohol component, the unsaturated polyester being dissolved in a polymerizable unsaturated monomer, is used usually. Examples of the α,β-unsaturated polybasic acid used therein include maleic acid, fumaric acid, itaconic acid, and derivatives such as anhydrides of these. Two or more may be used in combination. Further, as an acid component other than the α,β-unsaturated polybasic acid, a saturated acid such as phthalic acid, isophthalic acid, terephthalic acid, tetrahydrophthalic acid, adipic acid, sebacic acid, etc., and a derivative such as an acidic anhydride of the same may be used as required additionally, and in this case two or more of these may be used in combination.

Examples of the alcohol component include: aliphatic glycols such as ethylene glycol, diethylene glycol, propylene glycol, dipropylene glycol, 1,2-propanediol, 1,2-butanediol, 1,3-butanediol, and 1,4-butanediol; alicyclic diols such as cyclopentanediol, and cyclohexanediol; aromatic diols such as hydrogenated bisphenol A, propylene oxide adduct of bisphenol A, and xylene glycol; and polyhydric alcohols such as bis-propylene glycol ether, trimethylol propane, and pentaerythritol. Two or more of these may be used in combination.

The reaction between the acid component and the alcohol component is caused to occur, mainly by promoting the condensation reaction between these substantially in equal moles by a known method, while removing, to the outside of the system, low-molecular-weight components such as water that are generated during the reaction between the foregoing two components.

As the polymerizable unsaturated monomer, a monomer containing a styrene-based monomer and a (meth)acryl-based monomer may be used as principal components, along with another monomer as required, the another monomer having one or more polymerizable double bonds in its molecule. Examples of the styrene-based monomer include styrene, p-methyl styrene, α-methyl styrene, t-butyl styrene, divinylbenzene, etc. Two or more of these may be used in combination.

Examples of the acryl-based monomer include: methacrylic acids and esters of the same such as methyl methacrylate, ethyl methacrylate, 2-ethylhexyl methacrylate, and methacrylic acid; acrylic acids and esters of the same such as methyl acrylate, ethyl acrylate, 2-ethylhexyl acrylate, and acrylic acid; (meth)acrylamides; methoxydiethylene glycol (meth)acrylate; methoxypolyethylene glycol (meth)acrylate; and phenoxypolyethylene glycol (meth)acrylate. Two or more of these may be used in combination.

Examples of the acryl-based monomer further include ethylene glycol (meth)acrylate, diethylene glycol (meth)acrylate, polyethylene glycol di(meth)acrylate, trimethylol propane tri(meth)acrylate, and pentaerythritol tri(meth)acrylate, as well. Two or more of these may be used in combination.

Examples of the other polymerizable unsaturated monomer include monomethyl fumarate, dimethyl fumarate, monomethyl maleate, and dimethyl maleate. Two or more of these may be used in combination.

Regarding the mixture ratio between the unsaturated polyester and the polymerizable unsaturated monomer, usually 70 to 20 parts by weight of the polymerizable unsaturated monomer is mixed to 30 to 80 parts by weight of the unsaturated polyester.

In the unsaturated polyester resin component of the present invention, parabenzoquinone, hydroquinone, methadinitrobenzene, paraphenyldiamine, or the like is mixed, as a polymerization inhibitor.

The used amount of the same usually is 50 to 1,000 ppm with respect to the total amount of the unsaturated polyester and the polymerizable unsaturated monomer.

Examples of the curing catalyst for curing the unsaturated polyester resin component of the present invention include ketone peroxides, peroxydicarbonates, hydroperoxides, and diacylperoxides. Any one of these may be used alone, or two or more of these may be used in combination. The amount of the same used usually is 0.1 to 10 parts by weight with respect to 100 parts by weight of the sum of the unsaturated polyester and the polymerizable unsaturated monomer.

Among these hard resin components, urethane resin components (A1) and epoxy resin components (A4) are preferred because they provide moldability and a variety of component options, and the urethane resin components (A1) are preferred further.

In the present invention, the "non-silicone surfactant" refers to a surfactant not containing silicone. As the non-silicone surfactant (B), anionic surfactants (B-1), cationic surfactants (B-2), amphoteric surfactants (B-3), and nonionic surfactants (B-4) can be used. None of these contains silicone.

Examples of the anionic surfactant (B-1) include carboxylic acids (salts) (B-1a), sulfonic acids (salts) (B-1b), sulfuric esters (salts) (B-1c), and phosphoric esters (salts) (B-1d).

Examples of the carboxylic acids (salts) (B-1a) include higher aliphatic acids (salts) (B-1a1) having 8 to 24 carbon atoms, carboxyalkyl (having 1 to 3 carbon atoms) ethers (salts) (B-1a2) of higher alcohols having 8 to 24 carbon atoms, and carboxyalkyl (having 1 to 3 carbon atoms) ethers (salts) (B-1a3) of alkylene oxide (hereinafter abbreviated as AO) adducts of higher alcohols having 8 to 24 carbon atoms). The higher aliphatic acids and higher alcohols in the foregoing compositions may be of natural origins or be synthesized. Further, the bond position of the carboxyl group or the hydroxyl group may be at an end or a side chain of a hydrocarbon group.

Specific examples of the carboxylic acids (salts) (B-1a) include: sodium salts, potassium salts, ammonium salts, and alkanolamine salts of capric acid, lauric acid, myristic acid, palmitic acid, and stearic acid; sodium salt of carboxymethylated decyl alcohol, sodium salt of carboxymethylated lauryl alcohol, sodium salt of carbocymethylated tridecanol, sodium salt of carboxymethylated lauryl alcohol EO-2-mole adduct, sodium salt of carboxymethylated myristyl alcohol EO-3-mole adduct, etc.

Examples of the sulfonic acids (salts) (B-1b) include: sulfonated α-olefins (salts) (α-olefin having 8 to 24 carbon atoms) (B-1b1); sulfosuccinic acid (mono- or di-)esters (salts) of higher alcohol having 8 to 24 carbon atoms (B-1b2); alkyl benzene sulfonic acids (salts) having an alkyl group having 8 to 14 carbon atoms (B-1b3); and petroleum sulfonate (salt) (B-1b4). It should be noted that the hydrophobic groups composing the compounds (B-1b1) and (B-1b2) may be of natural origins or be synthesized.

The higher alcohol having 8 to 24 carbon atoms in the compound (B-1b2) may be straight-chain alcohol or branched-chain alcohol. Examples of the same include octyl alcohol, 2-ethyl hexyl alcohol, lauryl alcohol, palmityl alcohol, isostearyl alcohol, and oleyl alcohol.

The alkyl group having 8 to 14 carbon atoms in the compound (B-1b3) may be a straight-chain alkyl group or a branched-chain alkyl group. Examples of the alkyl group include octyl group, 2-ethylhexyl group, decyl group, isodecyl group, dodecyl group, isododecyl group, and pentadecyl group.

Specific examples of the sulfonic acids (salts) (B-1b) include sodium salts of sulfonated compounds of 1-octen, 1-decen, 1-dodecen and the like, sodium dioctylsulfosuccinate, sodium ditridecylsulfosuccinate, lauryl disodium sulfosuccinate, sodium octylbenzene sulfonate, sodium dodecylbenzene sulfonate, trialkyl amine salts [straight-chain or branched-chain alkyl amine salts having 2 to 18 carbon atoms (e.g. trimethylamine salt, dialkylmethylamine salt, trialkylamine salt, etc.) of dodecylbenzene sulfonic acids], etc.

Examples of the sulfuric esters (salts) (B-1c) include: sulfuric esters (salts) of higher alcohols [sulfuric esters (salts) of aliphatic alcohols having 8 to 18 carbon atoms] (B-1c1); sulfuric esters (salts) of higher alkyl ethers [sulfuric esters (salts) of EO-1 to 10-mole adducts of aliphatic alcohols having 8 to 18 carbon atoms] (B-1c2); sulfated oil (natural unsaturated oil or unsaturated wax neutralized by sulfation) (B-1c3); sulfated aliphatic acid esters (lower alcohol esters of unsaturated aliphatic acids, neutralized by sulfation) (B-1c4); and sulfated olefins (olefins having 12 to 18 carbon atoms, neutralized by sulfation) (B-1c5).

Specific examples of the sulfuric esters (salts) (B-1c) include turkey-red oil, sulfated tallow, sulfated peanut oil, sulfated oleic acid butyl salt, and sulfated ricinoleic acid butyl salt.

Examples of the phosphoric esters (salts) (B-1d) include phosphoric acid (mono- or di-) esters (salts) of alcohols having 3 to 24 carbon atoms (B-1d1), and phosphoric acid (mono- or di-) esters (salts) ofAO adducts of alcohols having 3 to 24 carbon atoms (B-1d2).

It should be noted that alcohols composing the above-described compounds may be of natural origins or be synthesized.

As the alkyl group in the polyoxyalkylene alkyl ethers in the compound (B-1d2), those derived from aliphatic alcohols may be used. From the aspect of the solubility in the hard resin component (A), the aliphatic alcohols are preferably straight-chain or branched-chain alcohols having 3 to 18 carbon atoms, more preferably straight-chain or branched-chain alcohols having 3 to 16 carbon atoms, and particularly preferably straight-chain or branched chain alcohols having 10 to 15 carbon atoms.

Examples of the alcohols having 3 to 18 carbon atoms include: straight-chain saturated alcohols such as propanol, dodecanol, tridecanol, tetradecanol, pentadecanol, hexadecanol, and octadecanol; straight-chain unsaturated alcohols such as oleyl alcohol; and branched-chain saturated alcohols such as propanol-2, butanol-2, 2-ethyl-1-hexanol, pentadecanol-2, and octadecanol-2.

Examples of the alkylene oxide adducts of the alcohols include EO adducts, PO adducts, and EO-PO co-adducts. Among these, EO adducts and EO-PO co-adducts are preferred, and EO adducts are particularly preferred. From the aspect of the solubility in the resin component (A), the number of added moles is preferably 1 to 10.

Examples of the salts of phosphoric acid esters include sodium salts, potassium salts, calcium salts, barium salts, aluminum salts, tin salts, copper salts, zinc salts, iron salts, and cobalt salts. Among these, sodium salts and potassium salts are preferred, and sodium salts are particularly preferred.

As the phosphoric acid ester salts, monoester salts, diester salts, and mixtures of these can be used.

Specific examples of the phosphoric esters (salts) (B-1d) include octyl alcohol phosphoric acid monoester potassium salt, octyl alcohol phosphoric acid diester dipotassium salt, lauryl alcohol phosphoric acid monoester monopotassium salt, lauryl alcohol phosphoric acid diester dipotassium salt, phosphoric acid monoester potassium salt of tridecyl alcohol EO-5.5-mole adduct, phosphoric acid diester potassium salt of tridecyl alcohol EO-5.5-mole adduct, phosphoric acid monoester potassium salt of isostearyl alcohol EO-5-mole adduct, and phosphoric acid diester dipotassium salt of isostearyl alcohol EO-5-mole adduct.

Examples of AO used in the compounds (B-1a3), (B-1c2), and (B-1d2) include EO, PO, and butylene oxide. Among these, EO and PO are preferred. Further, the number of moles of added AO with respect to 1 mole of higher alcohol is usually 1 to 50 moles, and preferably 1 to 20 moles.

In the case where the anionic surfactant (B-1) is in the salt form, examples of the same usually include: alkali metal salts (e.g. sodium salts, potassium salts); alkali earth metal salts (e.g. calcium salts, magnesium salts); transition metal salts (e.g. Fe salts, Co salts); IIB-group metal salts (e.g. Zn salts); IIIA-group metal salts (e.g. aluminum salts); and amine salts [e.g. ammonium salts, alkanolamine salts (e.g. salts of monoethanolamine, diethanolamine, triethanolamine, monoisopropanolamine, diisopropanolamine, and triisopropanolamine), etc.]. Among these, alkali metal salts and alkanolamine salts are preferred.

Examples of the cationic surfactants (B-2) include quaternary ammonium salt-type cationic surfactants (B-2a) and amine salt-type cationic surfactants (B-2b).

Examples of the cationic surfactants (B2) include, for example, those expressed by Formula (1) or (2) shown below, and mixtures of two or more of these:

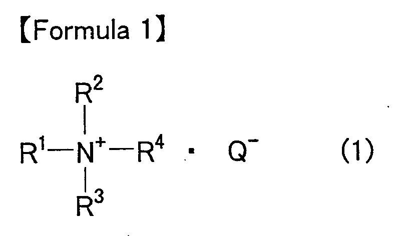

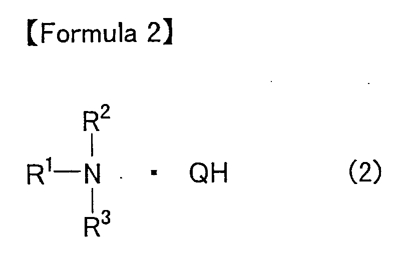

where each of R¹, R², and R³ independently represents a group selected from alkyl groups having 1 to 30 carbon atoms, alkenyl groups having 2 to 30 carbon atoms, hydroxyalkyl groups having 1 to 30 carbon atoms, polyoxyalkylene groups (the number of carbon atoms in an alkylene group: 2 to 4), and groups expressed as R⁵-T-R⁶- (R⁵ represents a residue remaining after removing COOH groups from an aliphatic acid having 1 to 30 carbon atoms, R⁶ represents an alkylene group having 1 to 4 carbon atoms or a hydroxyalkylene group having 1 to 4 carbon atoms, and T represents -COO- or -CONH-),
R⁴ represents an alkyl group having 1 to 30 carbon atoms, an alkenyl group having 2 to 30 carbon atoms, a hydroxyalkyl group having 1 to 30 carbon atoms, or a polyoxyalkylene group (the number of carbon atoms in an alkylene group: 2 to 4),
any two of R¹, R², and R³ may be bonded so as to form a heterocyclic ring along with N,
Q⁻ represents inorganic acid anion or an organic acid anion, and
QH represents an inorganic acid or an organic acid.

The alkyl group having 1 to 30 carbon atoms as R¹, R², and R³ may be a straight-chain type or a branched-chain type, and examples of the same include: methyl group, ethyl group, n- or i-propyl group, butyl group, pentyl group, hexyl group, heptyl group, octyl group, nonyl group, decyl group, undecyl group, dodecyl group, tridecyl group, tetradecyl group, pentadecyl group, hexadecyl group, heptadecyl group, octadecyl group, nonadecyl group, eicosyl group, hexacosyl group, docosyl group , and 2-ethyldecyl group. The alkenyl group having 2 to 30 carbon atoms may be a straight-chain type or a branched-chain type, and examples of the same include: n- or i-propenyl group, hexenyl group, heptenyl group, octenyl group, decenyl group, undecenyl group, dodecenyl group, tetradecenyl group, pentadecenyl group, hexadecenyl group, heptadecenyl group, octadecenyl group, nonadecenyl group, and 2-ethyldecenyl group.

Examples of the hydroxyalkyl group having 1 to 30 carbon atoms as R¹, R², and R³ may be a straight-chain type or a branched-chain type. Examples of the same include hydroxymethyl group, hydroxyethyl group, nor i-hydroxypropyl group, hydroxybutyl group, hydroxyhexyl group, hydroxyoctyl group, hydroxydecyl group, hydroxydodecyl group, hydroxytetradecyl group, hydroxyhexadecyl group, and hydroxyoctadecyl group.

Among these, the alkyl groups having 1 to 24 carbon atoms, the alkenyl groups having 2 to 24 carbon atoms, and the hydroxyalkyl groups having 1 to 24 carbon atoms are preferred.

Regarding the alkyl groups having 1 to 30 carbon atoms, the alkenyl groups having 2 to 30 carbon atoms, the hydroxylalkyl groups having 1 to 30 carbon atoms or the polyoxyalkylene groups (the number of carbon atoms in an alkylene group: 2 to 4) as R⁴, examples thereof include those mentioned above regarding R¹, R², and R³. Among these, alkyl groups and hydroxyalkyl groups having 1 to 4 carbon atoms are preferred.

Examples of the heterocyclic ring formed by bonding of any two of R¹, R², and R³ along with N for forming an alicyclic compound include an imidazoline ring, an imidazole ring, a pyridine ring, a pyrimidine ring, a piperidine ring, and a morpholine ring.

The aliphatic acid having 1 to 30 carbon atoms that constitutes the residue R⁵ may be a straight-chain type or a branched-chain type. Examples of the same include formic acid, acetic acid, propyonic acid, butyric acid, isobutyric acid, valeric acid, caproic acid, enanthic acid, caprilic acid, pelargonic acid, lauric acid, myristic acid, stearic acid, isostearic acid, behenic acid, and 2-ethylhexanic acid. Among these, aliphatic acids having 6 to 24 carbon atoms are preferred.

The alkylene group having 1 to 4 carbon atoms as R⁶ may be a straight-chain type or a branched-chain type. Examples of the same include methylene group, ethylene group, n- or i-propylene group, and butylene group. The hydroxyalkylene group having 1 to 4 carbon atoms may be a straight-chain type or a branched-chain type. Examples of the same include hydroxymethylene group, hydroxyethylene group, n- or i-hydroxypropylene group, and hydroxybutylene group.

Among these, alkylene groups having 1 to 4 carbon atoms are preferred.

Examples of the acid forming an anion Q⁻, i.e., QH, include the following:
(q1) inorganic acids
   halogenated hydrogen acids (hydrochloric acid, bromic acid, iodic acid, etc.), nitric acid, carbonic acid, phosphoric acid, etc.;
(q2) organic acids
(q2-a) alkylsulfuric acid esters
   alkylsulfuric acid esters having 1 to 4 carbon atoms, such as methylsulfuric acid, ethylsulfuric acid, etc.;
(q2-b) alkylphosphoric acid esters
   mono- and/or di-alkylphosphoric acid esters having 1 to 8 carbon atoms such as dimethyl phosphoric acid, diethylphosphoric acid, etc.
(q2-c) aliphatic monocarboxylic acids having 1 to 30 carbon atoms
   saturated monocarboxylic acids (those mentioned as aliphatic acids in which a residue constitutes R⁵, etc.), unsaturated monocarboxylic acids (acrylic acid, methacrylic acid, oleic acid, etc.), and aliphatic oxycarboxylic acids (glycolic acid, lactic acid, oxybutyric acid, oxycaproic acid, ricinoleic acid, oxystearic acid, gluconic acid, etc.);
(q2-d) aromatic or heterocyclic monocarboxylic acids having 7 to 30 carbon atoms
   aromatic monocarboxylic acids (benzoic acid, naphthoic acid, cinnamic acid, etc.), aromatic oxycarboxylic acids (salicylic acid, p-oxybenzoic acid, mandelic acid, etc.), and heterocyclic monocarboxylic acids
(pyrrolidone-carboxylic acid, etc.);
(q2-e) polycarboxylic acids having 2 to 4 carboxyl groups
   straight-chain or branched chain aliphatic polycarboxylic acids having 2 to 30 carbon atoms [saturated polycarboxylic acids (oxalic acid, malonic acid, succinic acid, glutaric acid, adipic acid, pimelic acid, suberic acid, azelaic acid, sebacic acid, etc.); unsaturated polycarboxylic acids having 4 to 30 carbon atoms (maleic acid, fumaric acid, itaconic acid, etc.)]; aliphatic oxypolycarboxylic acids having 4 to 20 carbon atoms (malic acid, tartaric acid, citric acid, etc.); aromatic polycarboxylic acids having 8 to 30 carbon atoms [dicarboxylic acids (phthalic acid, isophthalic acid; terephthalic acid, 2,6-naphthalene dicarboxylic acid, biphenyl dicarboxylic acids (2,2'-, 3,3'-, and/or 2,7-biphenyl dicarboxylic acid), etc.), and tri- or tetra-carboxylic acids (trimellitic acid, pyromellitic acid, etc.)]; polycarboxylic acids having 4 to 30 carbon atoms that contain sulfur (thiodipropionic acid, etc.);
(q2-f) amino acids having 2 to 30 carbon atoms
   amino acids such as asparaginic acid, glutamic acid, cysteic acid, etc.; (q2-g) carboxymethylated aliphatic alcohols (having 8 to 24 carbon atoms)
   carboxymethylated octyl alcohol, carboxymethylated decyl alcohol, carboxymethylated lauryl alcohol, carboxymethylated stearyl alcohol, carboxymethylated tridecanol, etc.; and
(q2-h) carboxymethylated aliphatic alcohol EO- and/or PO-1 to 20-mole adducts (the number of carbon atoms in alcohol: 8 to 24)
   carboxymethylated octyl alcohol EO-3-mole adduct, carboxymethylated lauryl alcohol EO-2.5-mole adduct, carboxymethylated isostearyl alcohol EO-3-mole adduct, carboxymethylated tridecanol
EO-2-mole adduct, etc.
   Among these, methylsulfuric acid, ethylsulfuric acid, adipic acid, gluconic acid, and isostearic acid are preferred, and isostearic acid is particularly preferred.

Examples of the quaternary ammonium salt-type cationic surfactants (B-2a) expressed by Formula (1) include: alkyl (having 1 to 30 carbon atoms) trimethylammonium salts [e.g. lauryl trimethylammonium chloride, lauryl trimethylammonium isostearic acid salt]; dialkyl (having 1 to 30 carbon atoms) dimethylammonium salts [e.g. didecyl dimethylammonium chloride, dioctyl dimethylammonium bromide, didecyl dimethylammonium isostearate, di(didecyl dimethylammonium) adipate, and salts of carboxymethylated didecyl dimethylammonium lauryl alcohol EO-1 to 5-mole adducts]; quaternary ammonium salts containing a nitrogen ring [e.g. cetyl pyridinium chloride]; quaternary ammonium salts containing a poly- (the number of added moles: 2 to 15) oxyalkylene chain (having 2 to 4 carbon atoms) [e.g. poly- (the number of added moles: 3) oxyethylene trimethylammonium chloride]; and alkyl (having 1 to 30 carbon atoms) amide alkyl (having 1 to 10 carbon atoms) dialkyl (having 1 to 4 carbon atoms) methyl ammonium salts [e.g. stearyl amide ethyl diethyl methyl ammonium methosulfate].

Among these, organic acid salts of alkyl trimethylammonium are preferred, and organic acid salts of dialkyl dimethylammonium are particularly preferred.

As the amine salt-type cationic surfactant (B-2b) expressed by Formula (2), a product obtained by neutralizing a tertiary amine with an inorganic acid (e.g. hydrochloric acid, nitric acid, sulfuric acid, hydroiodic acid) or an organic acid (e.g. acetic acid, formic acid, oxalic acid, lactic acid, gluconic acid, adipic acid, alkylsulfuric acid) can be used.

Examples of such a product include inorganic or organic acid salts of: aliphatic tertiary amines having 3 to 90 carbon atoms (e.g. triethylamine, ethyldimethylamine, didecylmethylamine, N,N,N',N'-tetramethyl ethylenediamine, lauryl amide propyl dimethylamine); alicyclic (nitrogen-containing heterocyclic inclusive) tertiary amines having 3 to 90 carbon atoms (e.g. N-methylpyrrolidine, N-methylpiperidine, N-methylmorpholine, 4-dimethylaminopyridine, N-methylimidazole, 4,4'-dipyridyl), or hydroxyalkyl group-containing tertiary amines having 3 to 90 carbon atoms (e.g. triethanolamine monostearic acid ester, N-stearylamide ethyl diethanolamine).

Among these, inorganic acid salts and organic acid salts of aliphatic amines are preferred.

As the amphoteric surfactant (B-3), any one of the following can be used: betaine-type amphoteric surfactants (B-3a), amino acid-type amphoteric surfactants (B-3b), sulfonic acid salt-type amphoteric surfactants (B-3c), phosphoric acid ester-type amphoteric surfactants (B-3d), and sulfuric acid ester-type amphoteric surfactants (B-3e), etc. Examples of the same include those disclosed in, for example, the specifications of US Patent No. 4,331,447 and US Patent No. 3,929,678.

Among these amphoteric surfactants (B-3), those expressed by Formulae (3), (4), and (5) shown below, and mixtures of two or more of these, are preferred:

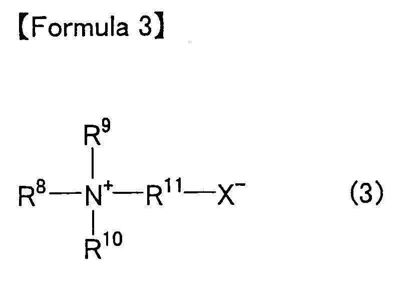

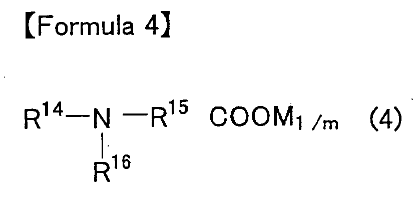

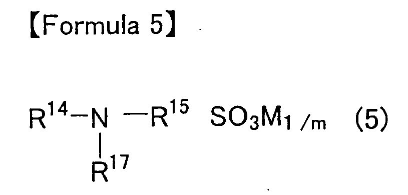

where each of R⁸, R⁹, and R¹⁰ independently represents a group selected from alkyl groups having 1 to 30 carbon atoms, alkenyl groups having 2 to 30 carbon atoms, hydroxyalkyl groups having 1 to 30 carbon atoms, and groups expressed by Formula R¹²-T-R¹³- (R¹² represents a residue remaining after removing COOH groups from an aliphatic acid having 1 to 30 carbon atoms, R¹³ represents an alkylene group having 1 to 4 carbon atoms or a hydroxyalkylene group having 1 to 4 carbon atoms, and T represents -COO- or -CONH-),
R¹¹ represents an alkylene group having 1 to 4 carbon atoms or a hydroxyalkylene group having 1 to 4 carbon atoms;
X⁻ represents COO⁻, or SO₃⁻;
R¹⁴ represents an alkyl group having 1 to 30 carbon atoms, an alkenyl group having 2 to 30 carbon atoms, or a hydroxyalkyl group having 1 to 30 carbon atoms;
R¹⁵ represents an alkylene group having 1 to 4 carbon atoms or a hydroxyalkylene group having 1 to 4 carbon atoms;
R¹⁶ represents a hydrogen atom or a group represented by Formula of R¹⁵COOM_{1/m};
R¹⁷ represents a hydrogen atom, an alkyl group having 1 to 30 carbon atoms, or an alkenyl group having 2 to 30 carbon atoms;
M represents a hydrogen atom, an alkali metal, an alkali earth metal, or an amine cation, and in the case where there are a plurality of Ms, they may be identical or different; and
m represents a valence of M, which is 1 or 2.

The alkyl groups having 1 to 30 carbon atoms or hydroxyalkyl groups having 1 to 30 carbon atoms that can constitute R⁸, R⁹, R¹⁰, R¹⁴, and R¹⁷ are the same as the above-described alkyl groups that can constitute R¹, R², and R3.

Among these, R⁸ and R¹⁴ preferably are selected from alkyl groups, alkenyl groups, and hydroxyalkyl groups having 6 to 24 carbon atoms and R¹²-CONHR¹³- groups, and R⁹ R¹⁰, and R¹⁷ are selected from alkyl groups having 1 to 24 carbon atoms, alkenyl groups having 2 to 24 carbon atoms, and hydroxyalkyl groups having 1 to 24 carbon atoms.

The aliphatic acids having 1 to 30 carbon atoms that can constitute the residue R¹² are the same aliphatic acids as the above-described aliphatic acids that can constitute R⁵, and the alkylene groups having 1 to 4 carbon atoms that can constitute R¹¹, R¹³, and R¹⁵ are the same as those which can constitute R⁶. Among these, R¹³ is preferably the alkylene group having 1 to 4 carbon atoms, and R¹¹ and R¹⁵ are preferably the alkylene groups having 1 to 3 carbon atoms.

Among COO⁻ and SO₃⁻ for X⁻, COO⁻ is preferred.

R¹⁶ is a hydrogen atom or a R¹⁵COOM_{1/m} group. Among these, a mixture of a compound in which R¹⁶ is a hydrogen atom and a compound in which R¹⁶ is a R¹⁵COOM_{1/m} group is preferred.

Examples of M include a hydrogen atom, alkali metals (e.g. lithium, potassium, sodium), alkali earth metals (e.g. calcium, magnesium), and amine cations (e.g. mono-, di-, or tri-ethanolamine cation, 2-ethylhexylamine cation). Among these, a hydrogen atom and alkali metals are preferred.

Examples of the betaine-type amphoteric surfactants (B-3a) expressed by Formula (3) include: alkyl (having 1 to 30 carbon atoms) dimethylbetaines (e.g. stearyl dimethylbetaine, lauryl dimethylbetaine); alkyl (having 1 to 30 carbon atoms) amide alkyl (having 1 to 4 carbon atoms) dimethylbetaines (e.g. coconut oil fatty acid amidepropyl dimethylbetaine, lauryl amidepropyl dimethylbetaine, stearyl amidepropyl dimethylbetaine); alkyl (having 1 to 30 carbon atoms) dihydroxyalkyl (having 1 to 30 carbon atoms) betaines (e.g. lauryl dihydroxyethylbetaine); and sulfobetaine-type amphoteric surfactants (e.g. pentadecyl dimethyltaurine). Among these, alkyl dimethylbetaines and alkyl amide alkyl dimethylbetaines are preferred.

Examples of the amino acid-type amphoteric surfactants (B-3b) expressed by Formula (4) include: alanine-type [e.g. alkyl (having 1 to 30 carbon atoms) aminopropionic acid-type, alkyl (having 1 to 30 carbon atoms) iminodipropione acid-type] amphoteric surfactants (e.g. sodium stearyl aminopropionate, sodium β-lauryl aminopropionate, sodium N-lauryl-β-iminodipropionate, potassium N-lauryl-β-iminodipropionate); and glycine-type [alkyl (having 1 to 30 carbon atoms) aminoacetic acid-type] amphoteric surfactants (e.g. sodium lauryl aminoacetate).

Among these, alkyl aminopropionic acid-type amphoteric surfactants and alkyl iminodipropionic acid-type amphoteric surfactants are preferred.

Examples of the sulfonic acid salt-type amphoteric surfactant expressed by Formula (5) (aminosulfonic acid salt-type amphoteric surfactant) (B-3c) include alkyl (having 1 to 30 carbon atoms) taurine-type (C₁₅H₃₁NHCH₂CH₂SO₃Na, C₁₇H₃₅NHCH₂CH₂CH₂SO₃Na, etc.) amphoteric surfactants.

As the phosphoric acid ester-type amphoteric surfactants (B-3d) and the sulfuric acid ester-type amphoteric surfactants (B-3e), phosphoric acid and sulfuric acid (mono- or di-) esters of amino alcohols expressed by Formula (6) shown below can be used:

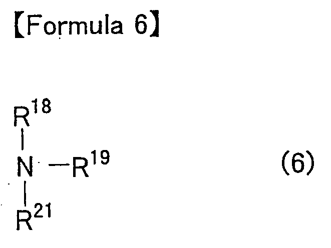

where R¹⁸ represents a group selected from alkyl groups having 1 to 30 carbon atoms, alkenyl groups having 2 to 30 carbon atoms, groups expressed by Formula R²²-T-R²³- (R²² represents a residue remaining after removing COOH groups from an aliphatic acid having 1 to 30 carbon atoms, R²³ represents an alkylene group having 1 to 4 carbon atoms or a hydroxyalkylene group having 1 to 4 carbon atoms, and T represents -COO- or -CONH-),
R¹⁹ represents a group expressed by Formula R²⁰-(AO)ₙ-OH,
R²⁰ represents an alkylene group having 1 to 4 carbon atoms, and
R²¹ represents a group selected from the same groups as those mentioned regarding R¹⁸, hydrogen, and the groups expressed by the same formula regarding R¹⁹.

In Formula (6), the hydrocarbon group constituting R¹⁸ is identical to the hydrocarbon group mentioned regarding R¹, R², R³, and R⁴, the aliphatic acid having 1 to 30 carbon atoms constituting the residue R²² is identical to the aliphatic acid mentioned regarding R⁵, and the alkylene group having 1 to 4 carbon atoms constituting R²³ is identical to the alkylene group mentioned regarding R⁶. Among these, R²³ is preferably an alkylene group having 1 to 4 carbon atoms, and R²⁰ is preferably an alkylene group having I to 3 carbon atoms. In the formula R²⁰-(AO)ₙ-OH, n is usually 0 or 1 to 10, and AO in the formula represents an oxyalkylene group. The number of carbon atoms in AO is usually 2, 3, and/or 4, and preferably 2 and/or 3.

Examples of the phosphoric acid ester-type amphoteric surfactant (B-3d) include: ethyl aminoethanol monophosphate, benzyl aminoethanol monophasphate, butyl aminoethanol diphosphate, benzyl aminoethanol diphosphate, butyl aminopropanol monophosphate, monophosphate of butyl aminoethanol EO-6-mole adduct, diphosphate of benzyl aminoethanol EO-2-mole adduct, dimethyl aminoethanol monophosphate, diethyl aminopropanol monophosphate, dibutyl aminoethanol monophosphate, dimethyl aminoethanol diphosphate, diethyl aminopropanol diphosphate, dibutyl aminoethanol diphosphate, monophosphate of diethyl aminopropanol EO-2-mole PO-2-mole block adduct, monophosphate of dibutyl aminopropanol EO-2-mole PO-2-mole random adduct, and monophosphate of diethyl aminopropanol EO-2-mole adduct.

Examples of the sulfuric acid ester-type amphoteric surfactant (B-3e) include butyl aminoethanol monosulfate, benzyl aminoethanol monosulfate, butyl aminoethanol disulfate, benzyl aminoethanol disulfate, monosulfate of butyl aminoethanol EO-6-mole adduct, disulfate of benzyl aminoethanol EO-2-mole adduct, dimethyl aminoethanol monosulfate, diethyl aminopropanol monosulfate, dimethyl aminoethanol disulfate, diethyl aminopropanol disulfate, dibutyl aminoethanol disulfate, monosulfate of dibutyl aminopropanol EO-2-mole PO-2-mole random adduct, monosulfate of dibutyl aminoethanol EO-10-mole addct, and monosulfate of diethyl aminopropanol EO-2-mole adduct.

Examples of the nonionic surfactant (B-4) of the present invention include AO adducts of alcohols having 1 to 24 carbon atoms (B-4a) and aliphatic acid ester compounds (B-4b).

The alcohols having 1 to 24 carbon atoms constituting the alcohol AO adducts (B-4a) are not particularly limited to synthetic alcohols or natural alcohols, but examples of the same include the following:
(x1) aliphatic monohydric alcohols having 1 to 24 carbon atoms [aliphatic saturated monohydric alcohols (e.g. methanol, 2-ethylhexyl alcohol, lauryl alcohol, palmityl alcohol, isostearyl alcohol) and aliphatic unsaturated monohydric alcohols having 2 to 24 carbon atoms (e.g. oleyl alcohol)]; and
(x2) aliphatic polyhydric (dihydric to hexahydric) alcohols having 1 to 24 carbon atoms or condensation products of the same [e.g. ethylene glycol, 1,4-butane diol, 1,6-hexane diol, neopentyl glycol, glycerol, trimethylol propane, pentaerythritol, sorbitol, and sorbitan].

Examples ofAO that composes the alcohol AO adduct (B-4a) include AO having 2 to 8 carbon atoms (EO, PO, butylene oxide, etc.).

Among these, EO and PO are preferred, and the type of addition may be random addition or block addition. The number of added moles is preferably 1 to 50 moles, more preferably 1 to 30 moles, and further preferably 1 to 20 moles. It is not preferable that the number of added moles exceeds the above-described range, since in such a case the solubility of the surfactant in the hard resin component (A) decreases.

Examples of the alkyl group that composes the alcohol AO adduct (B-4a) include saturated alkyl groups having 1 to 24 carbon atoms and unsaturated alkyl groups having 2 to 24 carbon atoms. The alkyl group may be of natural origins such as palm oil, tallow, colza oil, rice bran oil, and fish oil, or may be synthesized.

Examples of the carboxylic acid that composes the ester compound (B-4b) include the following:
(a1) aliphatic monocarboxylic acids having 1 to 24 carbon atoms [aliphatic saturated monocarboxylic acids (e.g. formic acid, ethanoic acid, propionic acid, lauric acid, palmitic acid, stearic acid, isostearic acid, isoarachic acid), and aliphatic unsaturated monocarboxylic acids having 2 to 24 carbon atoms (e.g. oleic acid, erucic acid); and
(a2) aliphatic dicarboxylic acids having 2 to 24 carbon atoms [aliphatic hydrocarbon-type saturated dicarboxylic acids (e.g. adipic acid, elaidic acid).

Examples of alcohols having 1 to 24 carbon atoms that can constitute the ester compound (B-4) include the following:
(xx1) aliphatic monohydric alcohol having 1 to 24 carbon atoms [aliphatic saturated monohydric alcohols having 1 to 24 carbon atoms (e.g. octyl alcohol, 2-ethylhexyl alcohol, lauryl alcohol, palmityl alcohol, isostearyl alcohol), and aliphatic unsaturated monohydric alcohols (e.g. oleyl alcohol)];
(xx2) aliphatic polyhydric (dihydric to hexahydric) alcohols having 2 to 24 carbon atoms and condensation products of the same [e.g. ethylene glycol, 1,6-hexane diol, neopentyl glycol, glycerol, trimethylol propane, pentaerythriol, sorbitol, and sorbitan];
(xx3) aliphatic alcohol (x1) AO adducts; aliphatic polyhydric alcohol (x2) AO adducts; and
(xx4) polyalkylene glycols.

Among the examples of the nonionic surfactant (B-4), specific preferable examples include: polyhydric alcohol aliphatic acid ester AO adducts (e.g. polyoxyethylene glycerol dioleate, polyoxyethylene sorbitan trioleate), castor oil EO adduct, hardened castor oil EO adduct, esters composed of the compounds (a1) and the compounds (xx1) [e.g. 2-ethylhexyl stearate, isodecyl stearate, isostearyl oleate, isoeicosyl stearate, isoeicosyl oleate, isotetracosyl oleate, isoarachidyl oleate, isostearyl palmitate, oleyl oleate]; esters composed of the compounds (a1) and the compounds (xx2) [e.g. glycerol dioleate, pentaerythritol tetraoleate]; esters composed of the compounds (a2) and the compounds (x1) [e.g. adipic acid esters such as dioleyl adipate, diisotridecyl adipate, etc.]; esters composed of the compounds (a1) and the compounds (xx3) [e.g. ester of "DOBANOL 23" (synthetic alcohol produced by Mitsubishi Chemical Corporation) to which 2 moles of EO is added and lauric acid, ester of isotridecyl alcohol to which 2 moles of PO is added and lauric acid, diester of "DOBANOL 23" to which 2 moles of EO is added and adipic acid]; and esters composed of the compounds (a1) and the compounds (xx4) [e.g., polyethylene glycol mono- (or di-) stearate, polyethylene glycol mono- (or di-) oleate].

Among the foregoing non-silicone surfactants (B), the anionic surfactants (B-1), the cationic surfactants (B-2), the nonionic surfactants (B-4), and combinations of these are preferred, since they have excellent solubility in the hard resin component (A) and do not bleed out of a machinable resin to be obtained. The anionic surfactants (B-1) are further preferred, and the sulfonic acid salts (B-1b) and the phosphoric esters (salts) (B-1d) are particularly preferred. Most preferred are the alkylbenzene sulfonic acids (salts) having an alkyl group having 8 to 14 carbon atoms (B-1b3), and the phosphoric acid (mono- or di-) esters (salts) ofAO adducts of alcohols having 3 to 24 carbon atoms (B-1d2).

Specific examples of those most preferred include dodecylbenzene sulfonic acid dilauryl methylamine salts, and phosphoric acid ester salts of polyoxyalkylene alkyl ethers.

Normally, the content (wt%) of the non-silicone surfactant (B) is preferably 0.5 to 20 wt%, more preferably 1 to 15 wt%, and particularly preferably 2 to 10 wt%, based on the total weight of the hard resin component (A) and the non-silicone surfactant (B), from the aspect of the static electricity accumulated in powder generated by cutting and the resin hardness. In the case where the non-silicone surfactant (B) is 2 to 10 wt%, the effect of reducing static electricity accumulated in powder generated by cutting is made most excellent, and a resin hardness appropriate for cutting is maintained.
In the case where the hard resin component (A) does not contain the non-silicone surfactant (B), even the addition of a silicone-based foam stabilizer (C1) and/or antifoaming agent (C2), which is described below, to the hard resin component (A) makes it impossible to achieve the effect of reducing the charge half-life of the present invention.

The material for forming a machinable resin molded product of the present invention may contain a silicone-based foam stabilizer (C1) and or antifoaming agent (C2) as required.

A machinable resin molded product to be used as a model after a cutting process has to have uniformity in its cut surfaces. On this account, the silicone-based foam stabilizer (C1) is contained in the material for forming a machinable resin molded product so that bubbles generated when the material is hardened or bubbles entering when the material is hardened are dispersed and maintained uniformly, or on the other hand, the silicone-based antifoaming agent (C2) is contained therein so that bubbles present therein are removed by decompression. Examples of the foam stabilizer (C1) and the antifoaming agent (C2) include dimethyl polysiloxane, and non-reactive dimethyl siloxane whose principal chain and/or side chain and/or end are modified by polyoxyalkylene, phenyl, alkyl, aralkyl, etc. They are selected appropriately depending on the hard resin component (A) selected.

The content (wt%) of the foam stabilizer (C1) is preferably 0.05 to 5 wt%, more preferably 0.3 to 3 wt%, and particularly preferably 0.5 to 2 wt%, based on the total weight of (A) + (B) + (C1).

When the content of the foam stabilizer (C1) is not less than 0.05 wt%, a foam stabilizing effect can be achieved, and when the content is not more than 5 wt%, the best foam stabilizing effect can be achieved.

The content (wt%) of the antifoaming agent (C2) is preferably 0.01 to 3 wt%, and more preferably 0.5 to 2 wt%, based on the total weight of (A) + (B) + (C2). When the content of the antifoaming agent (C2) is not less than 0.01 wt%, an antifoaming effect can be achieved, and when the content is not more than 2 wt%, the best antifoaming effect can be achieved.

In the case where the hard resin component (A) is the urethane resin component (A1) in the present invention, a dehydrating agent (F) is used for preventing water or moisture from being mixed in the polyurethane resin component and functioning as a foaming agent in the urethanation reaction, and for making cut surfaces fine when a molded product obtained is subjected to cutting.

As such a dehydrating agent, usually used compounds having a dehydrating effect can be used, among which, however, those which are neutral or alkaline and have a volume-average particle size of 0.1 to 50 µm are preferred.

Examples of such a dehydrating agent include calcium oxide; calcium sulfate (hemihydrate gypsum), calcium chloride, and molecular sieve. Calcium sulfate (hemihydrate gypsum) and molecular sieve are preferred, and molecular sieve is particular preferred.

The content (wt%) of the dehydrating agent (F) contained in the polyol component (A1-a) is preferably 0.5 to 15 wt%, more preferably 0.5 to 10 wt%, with respect to the component (A1-a). With the content in this range, the moisture contained in the polyol component (A1-a) can be removed therefrom to an extent such that foaming does not occur during an urethanation reaction, and appropriate flowability can be provided.

The content (wt%) of the dehydrating agent (F) contained in the polyisocyanate component (A1-b) is preferably 0.5 to 10 wt%, and more preferably 0.5 to 8 wt%, with respect to the component (A-1b). With the content in this range, the moisture contained in the polyisocyanate component (A-1b) can be removed therefrom to an extent such that foaming does not occur during a urea forming reaction in the polyisocyanate component (A-1b), and appropriate flowability can be provided.

To reduce the weight of a molded product or improve the machinability of a molded product, a hollow microsphere (G) may be used. Examples of such a hollow microsphere include: hollow microspheres comprising thermoplastic resins such as polyvinylidene chloride, polymethyl methacrylate, and polyacrylonitrile; hollow microspheres comprising thermosetting resins such as phenol resin, epoxy resin, and urea resin; and hollow microspheres comprising inorganic materials such as glass, alumina, shirasu, and carbon. The volume-average particle size of the hollow microsphere is 10 to 200 µm, and the bulk density is preferably 0.01 to 0.5. Specific examples of such hollow microspheres available from the market include "Matsumoto Microsphere F-80ED" and "MFL" series (produced by MATSUMOTO YUSHI-SEIYAKU CO., Ltd.), "phenolic microballoon BJO-0930" (produced by UNION CARBIDE), "Scotchlite K-15, K-37" (produced by Scotchlite), and the like.

The amount of the hollow microsphere (G) is preferably not more than 25 wt%, and more preferably not more than 20 wt% in the above-described material for forming the resin molded product. When the amount is in this range, the flowability of the material is improved further.

In the case where the hollow microsphere (G) is contained, the hollow microsphere (G) is used usually in a state of being mixed in the polyol component (A1-a), but it may be mixed in the isocyanate component (A1-b) also. In the case where it is mixed only in the component (A-1a), the effect of reducing the density is limited, but by mixing the same in the component (A-1b) also, the effect of further reducing the density can be achieved. Besides, by dividing the required amount of the microsphere (G) to be allocated to the polyol component (A-1a) and the isocyanate component (A-1b), the viscosities of the two components can be adjusted to be approximately equal to each other, whereby the operation of mixing the two components is facilitated. The ratio of allocation by volume is preferably such that 30 to 100 % of the hollow microsphere is allocated to the component (A-1a) and 70 to 0 % of the same is allocated to the component (A-1b). With the ratio in this range, the components (A-1a) and (A-1b) are caused to have approximately the same flowabilities, whereby the mixing operation is facilitated.

In this case, the dehydrating agent (F) may be contained in the component (A-1b) at the same time, in order to prevent reaction between moisture adsorbed to surfaces of the hollow microsphere during storage and isocyanate groups.

An additive (H) may be contained additionally in the resin molded product forming material of the present invention in order to improve the moldability, storability, and other functions of a molded product.

Examples of such an additive (H) include inorganic fillers (calcium carbonate, talc, etc.), lubricants (calcium stearate, ethylenediamine distearylamide, etc.), catalysts (amine-type catalysts such as triethylenediamine, metal-type catalysts such as dibutyl tin dilaurate, etc.), coloring agents (metal oxides, disazo pigments, etc.), anti-aging agents (nickel dibutyl dithiocarbamate, hindered phenol, etc.), and plasticizers (dibutyl phthalate, di-2-ethylhexyl adipate, etc.). One or more selected from these may be added.

In the case where the inorganic filler is added, the added amount (wt%) thereof is preferably 0.5 to 30 wt%, preferably 2 to 25 wt%, and particularly preferably 4 to 20 wt% based on the weight of the component (A).

In the case where the lubricant is added, the added amount (wt%) thereof is preferably 0.2 to 20 wt%, more preferably 2 to 15 wt%, and particularly preferably 3 to 10 wt% based on the weight of the component (A).

In the case where the plasticizer is added, the added amount (wt%) thereof is preferably 1 to 20 wt%, more preferably 2 to 15 wt%, and particularly preferably 3 to 10 wt% based on the weight of the component (A).

In the case where the catalyst is added, the added amount (wt%) thereof is preferably 0.001 to 0.5 wt%, more preferably 0.005 to 0.3 wt%, and particularly preferably 0.008 to 0.2 wt% based on the weight of the component (A).

In the case where the coloring agent or the anti-aging agent is added, the added amount (wt%) thereof is preferably 0.01 to 3 wt%, more preferably 0.05 to 2.5 wt%, and particularly preferably 0.1 to 2 wt% based on the weight of the component (A).

The total amount of the additives (H) (wt%) is preferably 0.001 to 40 wt%, more preferably 0.05 to 35 wt%, and particularly preferably 0.08 to 30 wt% based on the weight of the component (A).

In the material for forming the polyurethane resin of the present invention, the ratio of the components (A-1a) and (A-1b) may be varied. From the aspect of the strength of the resin, the isocyanate index [equivalent ratio of (NCO groups/active hydrogen atom-containing groups) × 100] is preferably 80 to 140, more preferably 85 to 120, and particularly preferably 90 to 115.

Examples of the resin molded product obtained from the resin forming material of the present invention are molded products that contain no microbubles, syntactic foams whose weights are reduced only owing to microbubbles of hollow microspheres, foamed products whose weights are reduced owing to microbubbles of an inert gas that are formed by the mechanical froth method, and foamed products that contain both of microbubbles of microspheres and microbubbles of an inert gas that are formed by the mechanical froth method.

The molded product that contains no microbubble has a high density of approximately not less than 1.2 g/cm³, and is used as a material for forming a model that requires a high strength. Normally, however, a syntactic foam or a foamed product is used instead, in order to provide a reduced weight and improved machinability, as a material for forming a model.

As a foaming method, the blowing-agent foaming method and the mechanical froth foaming method are available. In the blowing-agent foaming method, a volatile blowing agent such as fluorocarbon, a hydrogen atom-containing halogenated hydrocarbon, a low-boiling-point hydrocarbon or the like and water functioning as a hydrocarbon generating source are mixed during or prior to an operation of mixing a polyol component and an organic polyisocyanate component. In the mechanical froth foaming method, an inert gas such as air or nitrogen is blown in the foregoing components during the operation of mixing the components. The mechanical froth foaming method is adequate for forming a machinable molded product having fine surfaces required for a material for forming models.

The mechanical froth foaming method is not particularly limited, and a known mechanical froth foaming method can be used.
The mechanical froth foaming method is more preferable than the blowing-agent foaming method as a method for producing a material for forming models, from the aspects that fine bubbles are obtained after a foaming process and that the density distribution in a hardened product obtained by the mechanical froth foaming method is uniform.

The diameter of microbbubles obtained by the mechanical froth foaming method is preferably 0.5 to 300 µm, and more preferably 1 to 200 µm.

In the case where the diameter is not less than 0.5 µm, stable microbubbles can be obtained, while in the case where the diameter is not more than 300 µm, a machinable resin molded product obtained has fine texture, whereby the coating process performed after the cutting process is simplified. The amount (percent by volume (vol%)) of microbubbles formed by the mechanical froth foaming method is a percentage of a volume of an inert gas with respect to a volume of the molded product in the case of a molded product not containing hollow microsphere, or a percentage of a volume of hollow microsphere plus a volume of an inert gas with respect to a volume of the molded product in the case of a molded product containing hollow microsphere. The amount is preferably 10 to 80 vol%, more preferably 15 to 75 vol%, and further more preferably 20 to 70 vol%. When the amount is in this range, excellent machinability, as well as fine bubbles uniformly dispersed can be obtained.

As described in, for example, *"Mokei sakusei gijutsu manyuaru (Model Forming Technique Manual)"* (published by the Material Process Technology Center), the machinable resin molded product obtained in the present invention is either subjected to cutting (mechanical processing) usually with use of a NC milling machine or a machining center among computer-controlled machine tools, which are called "NC (numerical control) machines", or subjected to cutting (manual processing) with use of a saw, a chisel, a plane, or the like. Thereafter at a final stage, the finished surfaces of the same are smoothed with use of sandpaper, whereby a model is formed.

A cutting tool used in the cutting process is a ball end mill or a flat end mill, which is usually made of a material called high-speed steel or super alloy.

The cutting process is principally composed of three cutting stages, and its initial, middle, and final stages are called "coarse processing step", "middle processing step", and "finishing step", respectively. The molded product obtained in the present invention is, in the coarse processing step, cut preferably by operating a cutting tool with a diameter of 20 to 30 mm under conditions of a feed speed of 1,000 to 3,000 mm/min and a revolution rate of 200 to 5,000 rpm. Then, in the middle processing step, it is cut preferably by operating a cutting tool with a diameter of 10 to 20 mm under conditions of a feed speed of 1,000 to 2,000 mm/min and a revolution rate of 1,000 to 3,000 rpm. In the finishing step, it is cut preferably by operating a cutting tool with a diameter of 5 to 10 mm under conditions of a feed speed of 500 to 1,500 mm/min and a revolution rate of 1,000 to 2,000 rpm.

In the case where the model obtained is used for a design model of an automobile or the like, the model is finished further by coating (painting), and is subjected to the design evaluation. In the case where the model is used as a master model, which is a pattern for a molding die or the like, the model is subjected to shape inversion with use of foundry sand, resin, gypsum, or the like.

The hardness of the machinable resin molded product of the present invention is preferably not less than 60 measured by a ASTM D2240-type hardness meter, from the aspect of mechanical strength in the case where it is used as a master model for a molding die or the like, and is preferably not more than 85 from the aspect of excellent machinability.

### Best Mode for Carrying out the Invention

Hereinafter the present invention will be described in more detail with reference to Examples, though not being limited to Examples. It should be noted that "part" hereinafter refers to "part by weight".

The compositions, codes, and the like of materials used in Examples and Comparative Examples are as follows:

Polyol (A1-a1): polyether polyol having a hydroxyl value of 400 in which PO is added to glycerol
Isocyanate (A1-b1): polyethylene polyphenyl isocyanate "Millionate MR-200" [manufactured by NIPPON POLYURETHANE INDUSTRY CO., LTD.]
Alkylbenzene sulfonic acid salt (B-1b): dilauryl methyl amine salt of branched-type dodecylbenzene sulfonic acid, "CHEMISTAT 3112C-6" [manufactured by SANYO CHEMICAL INDUSTRIES, LTD.]
Phosphoric acid ester salt (B-1d): mixture of phosphoric acid mono- and di- ester sodium salt of EO-5.5-mole adduct of straight-chain alcohol having 13 carbon atoms, "CHEMISTAT 3500" [manufactured by SANYO CHEMICAL INDUSTRIES, LTD.]
Nonionic surfactant (B-4a): EO-7-mole adduct of lauryl alcohol, "EMULMIN NL-70" [manufactured by SANYO CHEMICAL INDUSTRIES, LTD.]
Conductive inorganic powder material (B'): lithium perchloride [manufactured by WAKO PURE CHEMICAL INDUSTRIES, LTD.]
Dehydrating agent (F1): synthetic zeolite, "PURMOL 3" [manufactured by CU Chemie Uetikon AG]
Hollow microsphere (G1): acryl microballoon having an average particle diameter of 20 µm and a density of 0.24 g/cm³, "Matsumoto Microsphere MFL-80GCA" [manufactured by MATSUMOTO YUSHI-SEIYAKU CO., LTD.]
Hollow microsphere (G2): phenol microballoon having an average particle diameter of 40 µm, a density of 0.22 g/cm³, and a water content of approximately 4 %, "BJO-0930" [manufactured by UNION CARBIDE]
Inorganic filler (H1): calcium carbonate, "Whiten SB" [manufactured by SHIRAISHI CALCIUM KAISHA, LTD.]
Foam stabilizer (B21): silicone-based foam stabilizer "SZ-1671" [manufactured by NIPPON UNICAR CO., LTD.]
Antifoaming agent (B31): silicone-based antifoaming agent "SAG-47" [manufactured by NIPPON UNICAR CO., LTD.]
Catalyst (H2): di-n-butyl tin dilaurate, "Stann BL" [manyfactured by SANKYO ORGANIC CHEMICALS CORPORATION]

The performance evaluation test of machinable resin molded products was carried out by the following methods.

### (a) Hardness

The hardness of a molded product was determined by a ASTM D2240-type hardness gauge.

### (b) Time in which electrical potential absolute value reaches 1kV

A molded product of 200 mm (width) × 50 mm (length) × 50 mm (thickness) was fixed on a surface plate of a NC machine [NCE23-1H-model router manufactured by KIKUKAWA IRON WORKS,INC.], and was subjected to a cutting process by using a 20 mm-diameter two-blade flat end mill ["PSL20.0" manufactured by UF TOOL CO. under a cutting program and conditions described below. During the cutting operation, powder generated by cutting was collected by placing a paper cup having a diameter of 120 mm in its opening, a diameter of 92 mm in its bottom, and a depth of 130 mm, near a portion being cut. During the collection, the cup was rotated at about six revolutions per minute so that the powder adhered to an internal wall of the cup uniformly.

### <Cutting program>

The following is performed as a cutting program. At the initial stage, the center of the flat end mill is placed at a left upper vertex of a rectangular shape of a molded product viewed from above. The center of the end mill is moved 200 mm rightward (widthwise direction). Then, it is moved 10 mm downward (lengthwise direction). Then, it is moved 200 mm leftward. Thereafter, it is moved 10 mm downward. These movements are repeated through such a so-called zig-zag cutting path, whereby an entire surface of the rectangle is subjected to the cutting process.

### <Cutting conditions>

A molded product was subjected to the cutting process by using the flat end mill under conditions of a moving speed of 2,000 mm/min, a revolution rate of 3,000 rpm, and a cutting depth of 5 mm.
The time measurement was started when the cutting process ended. A paper cup in which powder generated in the cutting process was collected was placed on a ceramic-made surface plate ["Precision Granite Surface Plate" manufactured by Mitsutoyo Corporation], and fixed so that an end of a detector of a potential measuring instrument [collector-type electrical potential measuring instrument KS-533 model, manufactured by KASUGA DENKI INC.] was positioned at the center of the opening of the paper cup. In this way the electrical potential was determined. The potential change after the end of the cutting process was tracked, and the time in which the absolute value of the potential reaches 1 kV was determined. (Normally, the electrical potential is approximately-3 to -5 kV immediately after the cutting process, thereafter approximating to 0 V owing to discharge to the air. Some molded products have positive electrical potentials at the initial stage immediately after the cutting process, depending on ingredients contained in the molded products, and therefore, an absolute value of an electrical potential is determined for the applicability to the both cases.) In the case where the time in which the absolute value of the electrical potential reaches 1 kV is shorter, it can be regarded that the discharge of the powder to the air is speedier. It should be noted that all the operations were performed at a temperature of 25 to 30°C and a relative humidity of 30 to 40 %.

### (c) Adhesion of powder generated by cutting

The manner in which the powder adhering to the inner wall of the paper cup fell to the bottom was observed visually during the charge amount determination operation. Evaluations were carried out as follows: the case where it was viewed that the powder fell rapidly is determined as good (○); the case where it was viewed that the powder fell finally after a certain period is determined as fair (△); and the case where it was viewed that the powder did not fall after several hours, exhibiting no change, is determined as poor (x).

### (d) Charge half-life

A test piece of 40 mm (length) × 40 mm (width) × 3 mm (thickness) was produced by cutting out each of the molded products produced as Examples, and a time in which the charge immediately after a voltage of -5 kV was applied to the test piece for three seconds decreased to half under conditions of 23°C and 55 %RH was measured by a tester shown below. The measurement was carried out according to JIS L 1094: 1997; 2. (1) the half-life measuring system.

Tester: Honest Meter Type H-0110 and Honest Analyzer - V1 manufactured by SHISHIDO ELECTROSTATIC, LTD.

### (e) Water content

Each of the molded products produced as Examples was subjected to the cutting process by a 20 mm-diameter four-blade flat end mill under conditions of 3,000 rpm, a feed speed of 300 mm/min, and a cutting depth of 10 mm, under environments of 20°C, 30 %RH. Powder generated in the operation was collected and sieved with a 20-mesh sieve, and the particles having passed the sieve were used as a sample for water content measurement. A water content of the sample was measured with use of a Karl Fischer moisture meter, according to JIS K2275: 1996.

### [Examples 1 to 7]

The <polyol component> shown in Table 1 in the composition (unit of amount: part by weight) shown in Table 1 was put in a planetary mixer, stirred at 130 rpm for 10 minutes, and thereafter defoamed by stirring for 5 minutes under a pressure of not more than 30 mmHg, whereby a mixture liquid of the <polyol component> was obtained.

Next, the foregoing mixture liquid of the <polyol component>, and the <isocyanate component> shown in Table 1 were put in the planetary mixer, stirred at 130 rpm for 5 minutes under a pressure of not more than 30 mmHg. The obtained mixture was poured into a mold having dimensions of 50 mm × 50 mm × 200 mm, and was heated at 80°C for two hours so as to be hardened. This was left to stand at normal temperature for eight hours so as to be cooled, and removed from the mold, to obtain a resin molded product.

The evaluation results of the molded products are shown in Table 1.

### [Examples 8 to 9]

The <polyol component> and the <isocyanate component> of each of the compositions shown in Table 1 were obtained in the same manner as Examples 1 to 7.

Next, while rotating a rotor of a mechanical froth machine (MF-350 type mechanical froth foaming apparatus manufactured by TOHO MACHINERY CO., LTD.) at 300 rpm, the <polyol component> and the <isocyanate component> were continuously supplied to a mixing head inlet at a rate of 10 to 20 L/min in total.

Then, the mixture liquid in which fine bubbles were uniformly dispersed, which was continuously discharged from an outlet, was poured into a mold having dimensions of 50 mm × 50 mm × 200 mm, and heated at 80°C for two hours so as to be hardened. Then, it was left to stand at normal temperature for eight hours so as to be cooled, and removed from the mold to obtain a resin molded product.

The evaluation results of the molded products are shown in Table 1.

### [Comparative examples 1 to 4 and 6]

Using the compositions shown in Table 2 (unit of amount: part by weight), molded products were obtained in the same manner as Examples 1 to 7. The evaluation results thereof are shown in Table 2

### [Comparative example 5]

Using the composition shown in Table 2 (unit of amount: part by weight), a molded product was obtained in the same manner as Examples 8 and 9. The evaluation results thereof are shown in the table.

**[Table 1]**

| | Example | | | | | | | | |
|---|---|---|---|---|---|---|---|---|---|
| | 1 | 2 | 3 | 4 | 5 | 6 | 7 | 8 | 9 |
| Polyol component | | | | | | | | | |
| Polyol (A1-a1) | 45.9 | 45.9 | 40.4 | 42.1 | 40.4 | 45.9 | 40.9 | 45.7 | 47.4 |
| Phosphoric acid ester salt (B-1d) | 5.5 | | 5.5 | 2.1 | | 2.8 | 5.5 | 5.5 | |
| Alkylbenzene surfonic acid salt (B-1b) | | 5.5 | | | | | | | 2.1 |
| Polyoxyethylene lauryl ether (B-4a) | | | | | 5.5 | 2.8 | | | |
| Lithium perchloride (B') | | | | | | | | | |
| Hollow microsphere (G1) | | | 5.5 | 5.5 | 5.5 | | | | |
| Dehydrating agent (F1) | 2.1 | 2.1 | 2.1 | 2.1 | 2.1 | 2.0 | 2.1 | 2.1 | 2.1 |
| Inorganic filler (H1) | | | | | | | 10.0 | | |
| Foam stabilizer (B21) | | | | | | | | 1.1 | 1.1 |
| Defoaming agent (B31) | 0.6 | 0.6 | 0.6 | 0.6 | 0.6 | 0.6 | 0.6 | | |
| Catalyst (H2) | 0.02 | 0.02 | 0.02 | 0.02 | 0.02 | 0.02 | 0.02 | 0.02 | 0.02 |
| Isocyanate component | | | | | | | | | |
| Isocyanate (A1-b1) | 45.9 | 45.9 | 40.4 | 42.1 | 40.4 | 45.9 | 40.9 | 45.6 | 47.3 |
| Hollow microsphere (G1) | | | 5.5 | 5.5 | 5.5 | | | | |
| Air amount (vol%) | | | | | | | | 30 | 30 |

| Evaluation result of molded product | | | | | | | | | |
|---|---|---|---|---|---|---|---|---|---|
| Density (g/cm³) | 1.20 | 1.18 | 0.82 | 0.83 | 0.83 | 1.19 | 1.27 | 0.83 | 0.82 |
| Hardness | 84 | 84 | 71 | 72 | 73 | 83 | 85 | 72 | 72 |
| Water content (%) | 0.41 | 0.23 | 0.56 | 0.52 | 0.66 | 0.48 | 0.31 | 0.72 | 0.74 |
| Charge half-life (sec) | 9 | 12 | 8 | 10 | 20 | 12 | 13 | 21 | 30 |
| Time in which electrical potential absolute value reached 1kV (sec) | 40 | 50 | 35 | 34 | 55 | 43 | 47 | 35 | 40 |
| Adhesion of powder | ○ | ○ | ○ | ○ | ○ | ○ | ○ | ○ | ○ |

**[Table 2]**

| | Comparative example | | | | | |
|---|---|---|---|---|---|---|
| | 1 | 2 | 3 | 4 | 5 | 6 |
| Polyol component | | | | | | |
| Polyol (A1-a1) | 43.2 | 43.1 | 31.9 | 40.4 | 48.4 | 40.3 |
| Phosphoric acid ester salt (B-1d) | | 0.2 | 22.5 | | | 5.5 |
| Alkylbenzene surfonic acid salt (B-1b) | | | | | | |
| Polyoxyethylene lauryl ether (B-4a) | | | | | | |
| Lithium perchloride (B') | | | | 5.5 | | |
| Hollow microsphere (G1) | 5.5 | 5.5 | 5.5 | 5.5 | | |
| Hollow microsphere (G2) | | | | | | 5.5 |
| Dehydrating agent (F1) | 2.1 | 2.1 | 2.1 | 2.1 | 2.1 | 2.1 |
| Inorganic filler (H1) | | | | | | |
| Foam stabilizer (B21) | | | | | 1.1 | |
| Defoaming agent (B31) | 0.6 | 0.6 | 0.6 | 0.6 | | 0.6 |
| Catalyst (H2) | 0.02 | 0.02 | 0.02 | 0.02 | 0.02 | 0.02 |

| Isocyanate component | | | | | | |
|---|---|---|---|---|---|---|
| Isocyanate (A1-b1) | 43.1 | 43.0 | 31.9 | 40.4 | 48.4 | 40.4 |
| Hollow microsphere (G1) | 5.5 | 5.5 | 5.5 | 5.5 | | 5.5 |
| Air amount (vol%) | | | | | 30 | |

| Evaluation result of molded product | | | | | | |
|---|---|---|---|---|---|---|
| Density (g/cm³) | 0.84 | 0.81 | 0.84 | 0.85 | 0.85 | 0.48 |
| Hardness | 72 | 71 | 50 | 74 | 73 | 49 |
| Water content (%) | 0.32 | 0.45 | 0.78 | 0.36 | 0.51 | 1.86 |
| Charge half-life (sec) | >120 | 94 | 7 | >120 | >120 | 31 |
| Time in which electrical potential absolute value reached 1kV (sec) | 18000 or more | 2700 | 30 | 18000 or more | 18000 or more | 22 |
| Adhesion of powder | × | △ | ○ | × | × | ○ |

### Industrial Applicability

With use of the machinable resin molded product of the present invention, malfunctions of a cutting machine caused by static electricity accumulated in powder or dust generated by cutting work, and adhering to walls of the machine or settling on a surface plate or a floor, are eliminated. The molded product obtained in the present invention, as a material for forming a model, has small decreases in values of physical properties of a resin. Therefore, it is widely applicable for various purposes ranging from a material for a product requiring strength, such as a master model for casting or a checking fixture, to a material for a design model, having a low density and not requiring high strength.

## Claims

1. A machinable resin molded product having a charge half-life of 1 to 60 seconds and a water content of 0.05 to 1.0 wt%.

2. The resin molded product according to claim 1, formed by a mechanical froth method, wherein a total volume of microbubbles having a microbubble diameter of 0.5 to 300 µm is 10 to 80 vol% based on a volume of the resin molded product.

3. A model obtained by cutting the resin molded product according to claim 1 or 2.

4. A machinable resin molded product-forming material for forming the resin molded product according to claim 1, comprising a hard resin component (A) and a non-silicone surfactant (B).

5. The material according to claim 4, wherein a content of the non-silicone surfactant (B) is 0.5 to 20 wt% based on a total weight of the hard resin component (A) and the non-silicone surfactant (B).

6. The material according to claim 4 or 5, wherein the non-silicone surfactant (B) is at least one selected from the group consisting of anionic surfactants, cationic surfactants, and nonionic surfactants.

7. The material according to any one of claims 4 to 6, wherein the non-silicone surfactant (B) is a mixture of a nonionic surfactant and either an anionic surfactant or a cationic surfactant.

8. The material according to claim 6 or 7, wherein the anionic surfactant is a phosphoric acid ester salt or an alkylbenzene sulfonic acid salt.

9. The material according to claim 8, wherein the phosphoric acid ester salt is a monophosphoric acid ester salt and/or a diphosphoric acid ester salt of a polyoxyalkylene compound.

10. The material according to claim 9, wherein the polyoxyalkylene compound that composes the phosphoric acid ester salt is an adduct of alcohol having 3 to 24 carbon atoms in which 1 to 10 moles of an ethylene oxide is added.

11. The material according to any one of claims 4 to 10, wherein the hard resin component (A) is a polyurethane resin-forming component composed of a polyol component (A1-a) and an isocyanate component (A1-b).
